# EUROPEAN PATENT APPLICATION

(11) **EP 3 522 060 A1**
(43) Date of publication of application: **07.08.2019**
(21) Application number: 17855579.3
(22) Date of filing: 01.09.2017
(51) Int. Cl.: G06F 21/60, G06F 9/44, G06F 9/445, G06Q 50/10

(54) **APPLICATION DEVELOPMENT ENVIRONMENT PROVISION SYSTEM, APPLICATION DEVELOPMENT ENVIRONMENT PROVISION METHOD, COMPUTER-READABLE NON-TRANSITORY MEDIUM, AND TERMINAL DEVICE**

(30) Priority: 30.09.2016 JP 2016193560
(71) Applicant: Yokogawa Electric Corporation, Musashino-shi Tokyo 180-8750 (JP)
(72) Inventor: TANIGUCHI Koichi, Musashino-shi Tokyo 180-8750 (JP)
(74) Representative: Henkel, Breuer & Partner
(86) International application number: PCT/JP2017/031659
(87) International publication number: WO 2018/061621

(57) **Abstract**

An application development environment provision system that provides development environments for application programs via a network and comprises a management unit that: if first information that identifies a device node used by the application program is specified by an instruction from a tenant using the development environment, associates the specified first information and second information relating to the tenant that specified the first information; and performs management processing that restricts or permits use of the device node.

## Description

### [Technical Field]

The present invention relates to an application development environment providing system, an application development environment provision method, a non-transitory computer readable storage medium, and a terminal device.

### [Background Art]

In a plant, a factory, or the like, a distributed control system (DCS) in which field devices (measurement devices and operating devices) and a control device that controls the field devices are connected via communication means is constructed, and advanced automatic operation is realized. In a plant in which such an advanced automatic operation is realized, various systems (engineering systems) such as a manufacturing execution system (MES), a plant information management system (PIMS), and an enterprise resource planning (ERP) system are often constructed, in addition to the distributed control system.

Most of these engineering systems are realized by using devices installed in a plant such as a programmable logic controller (PLC), a factory automation (FA) computer, a general-purpose desktop computer, or a server device. In recent years, with the progress of communication technology, some of the engineering systems are realized by cloud computing via a network.

Here, the cloud computing may conform to the definition stated in the document specified by the following URL (Uniform Resource Locator) (a definition recommended by the US National Institute of Standards and Technology).
http://nvlpubs.nist.gov/nistpubs/Legacy/SP/nistspecialpublication800-145.pdf
https://www.ipa.go.jp/files/000025366.pdf

Patent literature 1 below discloses cloud computing for an industrial automation and production system. Patent literature 2 below discloses an example of a technology for providing, through cloud computing, a development environment for developing an application program to be used in a cloud computing environment.

### [Citation List]

### [Patent Literature]

[Patent Literature 1] Japanese Unexamined Patent Application Publication (Translation of PCT Application) No. 2012-523038
[Patent Literature 2] Japanese Patent No. 5792891

### [Summary of Invention]

### [Technical Problem]

The system that provides the development environment disclosed in, for example, Patent literature 2 described above is used at various enterprises (tenants). For example, in a case where development of an engineering system that is realized at a plant is performed, the system that provides the development environment is used by a customer (for example, an orderer), an engineering company (for example, a contractor), and a third vendor (a third party).

In a system that is used by such various tenants, the presence of a device to be used in a plant or the like should not be known to other tenants from the viewpoint of security. Access from another department (site) or another employee (user) in the same tenant can be restricted. In addition, since accommodation (setting) of a device in the related art is all performed manually, the accommodation is very inefficient and costly. When device accommodation work can be performed efficiently, it is conceivable that it may be possible to shorten a time required for engineering (for example, installation and setting work of a device or the like) and to reduce the costs.

### [Solution to Problem]

An application development environment providing system (1) of the present invention provides a development environment for an application program via a network, the application development environment providing system includes a manager (55) configured to, in a case where first information for identifying a device node (11) to be used in the application program is specified in accordance with an instruction of a tenant that uses the development environment, associate the specified first information with second information on the tenant that has specified the first information, and to perform a management process of restricting or permitting a use of the device node.

In the application development environment providing system of the present invention, in a case where the first information is specified, the manager is configured to search an accumulator (32, 42) in which the first information of the device node connected to a network is accumulated, and when the specified first information is searched, the manager is configured to associate the first information with the second information.

In the application development environment providing system of the present invention, in a case where there is authentication information corresponding to the first information, the manager is configured to perform authentication process using authentication information accumulated in the accumulator and authentication information instructed with the first information by the tenant.

In the application development environment providing system of the present invention, the management process comprises at least one of a first process of assigning the device node to a specific site and account among sites and accounts belonging to the tenant which has specified the first information, a second process of setting an access authority for the device node for each of the site and the account, and a third process of restricting or permitting a use of the device node only to a specific application program.

In the application development environment providing system of the present invention, the device node to which the management process has been performed is displayed as development parts on an application development screen.

In the application development environment providing system of the present invention, the application development screen includes a development part list display region (E1) in which the device node to which the management process has been performed is displayed, and an application design region (E2) in which a structure of the application program is visually displayed and it is possible to create and edit the application program.

The application development environment providing system of the present invention, further includes a program developer (51) configured to provide a user with the application development environment, and to visually display the application program.

In the application development environment providing system of the present invention, the program developer is configured to visually display the application program on the basis of layout information, connection information, parameter information, and selection region information, the layout information is information representing a form of a process of the application program, the connection information is information on a line connecting an input data item, a logic serving as content of a process, and an output data item serving as a result of the process, the parameter information is information representing a setting value of a parameter set in the application program, and the selection region information is information representing a part of process selected by a user among a series of processes of the application program.

The application development environment providing system of the present invention, further includes a communicator (52) configured to transmit and receive a part or all of the application program including setting information.

In the application development environment providing system of the present invention, the communicator is configured to provide at least one of a chat function, a video communication function, a voice communication function, a screen sharing function, and a community function.

The application development environment providing system of the present invention, further includes a library (53) configured to provide a tool which is used when an application program is developed or executed on the program developer.

In the application development environment providing system of the present invention, the library is configured to provide at least one of a similar waveform search tool, a regression analysis tool, a multiple regression analysis tool, an MT method analysis tool, an error variance analysis tool, a data driven modeling tool, a deep learning tool, and a correlation analysis tool.

An application development environment provision method of the present invention provides a development environment for an application program via a network, the application development environment provision method includes specifying first information for identifying a device node (11) to be used in the application program in accordance with an instruction of a tenant that uses the development environment (S105, S106), associating the specified first information with second information on the tenant that has specified the first information (S109), and performing a management process of restricting or permitting a use of the device node (S112 to S114).

The application development environment provision method of the present invention, further includes searching the specified first information from an accumulator (32, 42) in which the first information of the device node connected to a network is accumulated (S107), and associating the first information with the second information when the specified first information is searched.

The application development environment provision method of the present invention, further includes at least one of assigning the device node to a specific site and account among sites and accounts belonging to the tenant which has specified the first information, setting an access authority for the device node for each of the site and the account, and restricting or permitting a use of the device node only to a specific application program.

A non-transitory computer readable storage medium of the present invention stores one or more programs configured for execution by a computer, the one or more programs include instructions for providing a development environment for an application program via a network, and in a case where first information for identifying a device node (11) to be used in the application program is specified in accordance with an instruction of a tenant that uses the development environment, associating the specified first information with second information on the tenant that has specified the first information, and performing a management process of restricting or permitting a use of the device node.

A terminal device (16) of the present invention is communicably connected to a development environment for an application program provided via a network, the terminal device includes a display configured to display a device node to which a management process of restricting or permitting a use of the device node has been performed, first information for identifying the device node to be used in the application program being specified in accordance with an instruction of a tenant that uses the development environment, the first information being associated with second information on the tenant that has specified the first information.

In the terminal device of the present invention, the management process includes at least one of a first process of assigning the device node to a specific site and account among sites and accounts belonging to the tenant which has specified the first information, a second process of setting an access authority for the device node for each of the site and the account, and a third process of restricting or permitting a use of the device node only to a specific application program.

In the terminal device of the present invention, the device node to which the management process has been performed is displayed as development parts on an application development screen.

In the terminal device of the present invention, the application development screen includes a development part list display region (E1) in which the device node to which the management process has been performed is displayed, and an application design region (E2) in which a structure of the application program is visually displayed and it is possible to create and edit the application program.

Further features and aspects of the present disclosure will become apparent from the following detailed description of exemplary embodiments with reference to the attached drawings.

### [Advantageous Effects of Invention]

According to the present invention, in a case where the entity identification information of the device node to be used in the application program is specified in accordance with an instruction of the tenant that uses the application development environment providing system, the specified entity identification information is associated with the tenant that has specified the entity identification information, and a management process of restricting or permitting the use of the device node is performed. Therefore, it is possible to realize efficient development and introduction of application programs that are used in a cloud computing environment while securing security.

### [Brief Description of Drawings]

FIG. 1 is a schematic diagram illustrating a system overview of an application development environment providing system according to an embodiment of the present invention.
FIG. 2 is a diagram illustrating an example of a connection form between a device node and an intelligence node via a spinal node.
FIG. 3 is a diagram illustrating an example of a connection form between a device node and an intelligence node via a things cloud.
FIG. 4 is a block diagram illustrating a configuration related to transmission and reception of entity identification information in the connection form illustrated in FIG. 2.
FIG. 5 is a block diagram illustrating a configuration related to transmission and reception of entity identification information in the connection form illustrated in FIG. 3.
FIG. 6 is a functional configuration diagram of a co-innovation space implemented in an application development environment providing system according to an embodiment of the present invention.
FIG. 7 is a state transition diagram illustrating a state transition at the time of accommodating a device node.
FIG. 8 is a flowchart showing a process when a device node is accommodated.
FIG. 9A is a diagram illustrating an example of a seal affixed to a device node.
FIG. 9B is a diagram illustrating an example of a seal affixed to a device node.
FIG. 10 is a diagram illustrating a first example of a device node accommodation work procedure.
FIG. 11 is a sequence diagram illustrating a first example of a device node accommodation work procedure.
FIG. 12 is a diagram illustrating a second example of a device node accommodation work procedure.
FIG. 13 is a diagram illustrating an example of an application development screen according to an embodiment of the present invention.

### [Description of Embodiments]

Embodiments of the present invention will be described with reference to preferred embodiments. Those skilled in the art can achieve many alternatives to the embodiment using teachings of the present invention, and the present invention is not limited to the preferred embodiments described herein.

An aspect of the present invention is to provide an application development environment providing system, an application development environment provision method, a computer-readable non-transient storage medium, and a terminal device, which are capable of realizing efficient development and introduction of application programs that are used in a cloud computing environment while securing security.

Hereinafter, an application development environment providing system, an application development environment provision method, an application development environment providing program, and a terminal device according to an embodiment of the present invention will be described in detail with reference to the drawings. A development environment that is provided in the embodiment is a development environment for developing programs such as basic software, applications, and solutions (hereinafter collectively referred to as an "applications") of the Internet of Things (IoT) or Industrial Internet of Things (IIoT), which perform a computation process or the like using data transmitted from sensors, devices, systems, and the like connected to a communication network as input values.

### <Application development environment providing system>

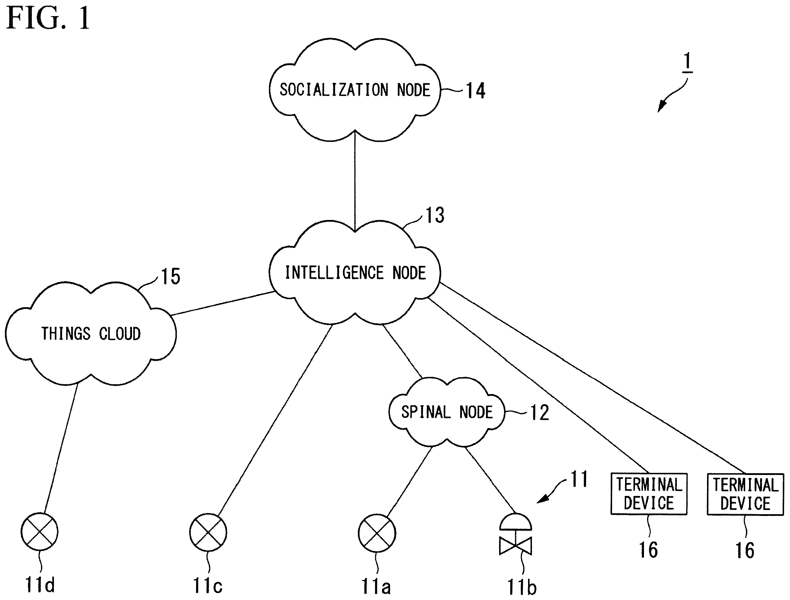

FIG. 1 is a schematic diagram illustrating a system overview of an application development environment providing system according to an embodiment of the present invention. As illustrated in FIG. 1, in a cloud computing environment, the application development environment providing system 1 is a system configured in a hierarchical structure of four hierarchies including a device node 11, a spinal node 12, an intelligence node 13, and a socialization node 14. In this application development environment providing system 1, a things cloud 15 and a terminal device 16 are connected to an intelligence node 13, as illustrated in FIG. 1.

The device node 11 includes various sensors, various devices, and various systems. Examples of the various sensors include a temperature and humidity sensor, a pressure sensor, and a flow rate sensor. Examples of the various devices include a programmable logic controller (PLC) that is a control device, on-board diagnostics (OBD: self-malfunction diagnosis) device connected to a controller area network-BUS (CAN-BUS: bus type control network) in a vehicle, a key performance indicator (KPI) monitor, a display that displays a current value of a specific sensor, a lamp, a buzzer, a valve, and a robot arm. Examples of the various systems include a DCS, a drone control system, an intrusion detection system, a security system to which an entrance badge reader is connected, and a building automation system to which lighting, a door lock, an elevator, a sprinkler, or the like is connected.

In the application development environment providing system 1 illustrated in FIG. 1, a device node 11a constituted by a sensor, a device node 11b constituted by an actuator, a device node 11c constituted by a sensor, and a device node 11d constituted by a sensor are included on a layer of the device node 11. Hereinafter, the device nodes 11a to 11d may be simply referred to as a "device node 11" when the device nodes 11a to 11d are collectively referred to without being distinguished from each other.

The device node 11 of the application development environment providing system 1 according to the embodiment includes three device nodes 11a, 11c, and 11d constituted by sensors and one device node 11b constituted by an actuator in order to simplify the description, but the present invention is not limited thereto. The device node 11 can be arbitrarily constituted by one or more device nodes including sensors, devices, or systems.

Examples of the sensor, the device, the system, and the like constituting the device node 11 include a device that transmits data, a device that receives and displays data, and a device that receives data and causes an action. The sensor, device, system, or the like is, for example, a device compatible with plug-and-play. The sensor, device, system, or the like is, for example, a device having a function of communicating simultaneously with a plurality of applications.

Examples of the device node 11 include a device that communicates with the device constituting the spinal node 12, a device that communicates with the device constituting the intelligence node 13, and a device that communicates with the device constituting the things cloud 15. Examples of the device node 11 communicatively connected to a device constituting the spinal node 12 includes a device that requires real time, a device that is used for an application in which data delay (data communication delay) or fluctuation (a variation in a data communication speed), or the like is not permitted, and a device in which there is concern that a communication band is tightened when the device is directly connected to the intelligence node 13 in order to generate a large amount of data.

The device node 11 communicatively connected to the device constituting the intelligence node 13 is a device that is used for a purpose not affected by delay, fluctuation, or the like, unlike the device node 11 communicatively connected to the device constituting the spinal node 12. The device node 11 communicatively connected to a device constituting the things cloud 15 is, for example, a device that is installed at a remote place for which a wireless communication network such as a cellular phone network or a satellite line needs to be passed through, and a device to be moved.

In the example illustrated in FIG. 1, the device node 11a and the device node 11b are connected to a device constituting the spinal node 12 via a local area network (LAN), for example. The device node 11c is connected to a device constituting the intelligence node 13 via the Internet, for example. The device node 11d is connected to a device constituting the things cloud 15 via a cellular network, for example.

The spinal node 12 is constituted by a server device and functions as a gateway. The server device (hereinafter also simply referred to as a "spinal node 12") constituting the spinal node 12 is a server device that accommodates at least one device node 11 in a cloud computing environment (that is, logically connects the device node 11, manages the device node 11, or performs data input and output to and from the device node 11).

The spinal node 12 is generally a device called a gateway server, a fog computer, an edge computer or the like, for example. The spinal node 12 is installed between a server device (the intelligence node 13 and the socialization node 14 in the embodiment) in a cloud computing environment and a sensor, a device, and a system constituting the device node 11.

The spinal node 12, for example, receives data from the device node 11 that performs communication according to a communication protocol with which the intelligence node 13 cannot perform communication. The spinal node 12 transmits the received data to the intelligence node 13 according to a communication protocol with which the intelligence node 13 can perform communication. Accordingly, the spinal node 12 transfers data from the device node 11 to the intelligence node 13. For example, the spinal node 12 receives a signal transmitted from an analog sensor or the like that cannot perform communication according to an Internet protocol, according to a communication protocol other than the Internet protocol. The spinal node 12 digitally converts the received signal, normalizes the signal, and then transmits the normalized signal to a server device constituting the intelligence node 13 (hereinafter also simply referred to as an "intelligence node 13") through communication based on the Internet protocol. Accordingly, the spinal node 12 transfers data from the device node 11 to the intelligence node 13.

For example, the spinal node 12 receives data transmitted from the device node 11, performs a process such as calculation, interpretation, and determination on the received data, and transmits a result of the process to the intelligence node 13.

The spinal node 12, for example, acquires data from the device node 11, performs preprocessing on the data, adds a time stamp (a symbol indicating a generation time) to generate time series data, acquires a logic, an algorithm, or the like for processing the time series data from the intelligence node 13, and executes a process (a process such as processing or a determination) for the time series data on the basis of the logic, the algorithm, or the like. The spinal node 12, for example, transmits the time series data to the intelligence node 13 as necessary or on the basis of an instruction from the intelligence node 13. The spinal node 12 transmits a control signal indicating an action generated on the basis of the time series data and the logic, the algorithm, or the like to the appropriate device node 11a.

The spinal node 12 temporarily stores time series data in a time series database (not illustrated) provided in the spinal node 12. At the same time, the spinal node 12 transmits the time series data to the intelligence node 13 in response to a request from the intelligence node 13. Further, the spinal node 12 transmits the time series data temporarily stored in the time series database asynchronously from old data in order to a historian (not illustrated) via a communication route in which security has been secured. The historian may be directly connected to the intelligence node 13. In this case, the intelligence node 13 can refer to and use the historian as there is this historian in a local environment.

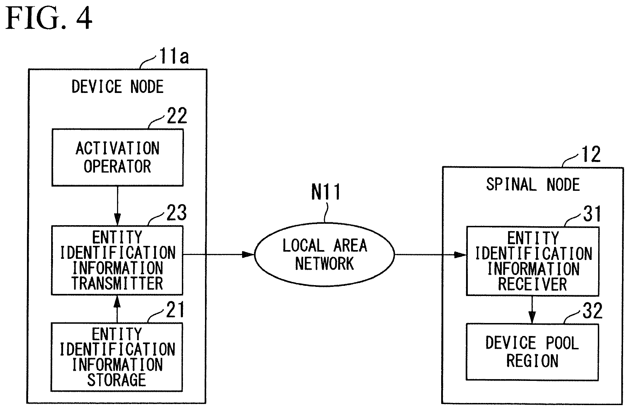

A device pool region 32 (see FIG. 4) that accumulates information for identifying a device node in an initial state connected to the spinal node 12 is provided in the spinal node 12. The device pool region 32 is a region in which information for identifying a newly available device node among device nodes connected to the spinal node 12 is stored. Specific information accumulated in the device pool region 32 is entity identification information uniquely allocated to the device node in advance, or the entity identification information and a unique pass code for authentication (authentication information). Such information, for example, is automatically transmitted from the device node to the spinal node 12 through plug-and-play and is accumulated in the device pool region 32 when the device node is connected to the spinal node 12.

In a case where the spinal node 12 is constituted by a single piece of hardware, the device node 11 communicatively connected to the spinal node 12 may transmit data to the two or more spinal nodes 12 in parallel in preparation for a case in which a failure or abnormal operation occurs in the spinal node 12. When the device node 11 is a device that performs communication using an Internet protocol, redundancy may be performed by the device node 11 transmitting data, a control signal, and the like to the communication network using a technique such as multicasting or broadcasting, and a plurality of spinal nodes 12 receiving the data, the control signal, and the like in parallel.

The intelligence node 13, the socialization node 14, and the things cloud 15 include, for example, a server device and a network device that provide a cloud computing environment. Here, the cloud computing environment is an environment in which various services are provided by a server connected to a network such as the Internet. The intelligence node 13, the socialization node 14, and the things cloud 15 may be physically separated as separate devices or may be logically separated in a single device.

A device constituting the intelligence node 13 provides a function for enabling an application development environment or an application execution environment to be shared among organizations (hereinafter also referred to as "sites") such as a plurality of departments or groups that jointly develop applications within an enterprise, and among a plurality of employees (hereinafter, "accounts" or "users"). A device constituting the socialization node 14 (hereinafter also simply referred to as a "socialization node 14") provides a function of enabling an application development environment or an application execution environment to be shared among a plurality of enterprises (hereinafter also referred to as "tenants") that jointly develop applications, between an enterprise providing applications and enterprise customers that use applications, and between an enterprise and an individual.

The application development environment is a development environment for developing programs such as basic software, applications, and solutions of the IoT or IIoT, which perform a computation process or the like using data transmitted from sensors, devices, systems, and the like connected to the communication network as input values in the cloud computing environment. The application execution environment is an environment for executing programs such as the basic software, applications, and solutions of the IoT or IIoT, which perform a computation process or the like using data transmitted from sensors, devices, systems, and the like connected to the communication network as input values in the cloud computing environment.

Hereinafter, an application development environment and an application execution environment in the present invention that can be shared among enterprises, among enterprises and individuals, and among users within enterprises, which are constituted by the intelligence node 13 and socialization node 14, are collectively referred to a co-innovation space. The co-innovation space is a virtual space in the cloud computing environment. In addition, the co-innovation space is a space for application co-creation, which is separated into units of enterprises (tenants), into units of organizations (sites), or the like, that are separated safely from each other.

Using an architecture of the co-innovation space, for example, it is possible to develop applications for performing, for example, consultation, various controls, asset management, remote sensing, remote monitoring, KAIZEN (improvement) activity support using big data, and to develop systems such as an MES or a DCS. The co-innovation space may also be implemented in a server device of a data center in a local environment, instead of being implemented in a cloud computing environment.

The architecture of the co-innovation space described above may be provided by one or a plurality of devices constituting the intelligence node 13 and the socialization node 14. A storage region in the architecture of the co-innovation space may be a storage of one or a plurality of devices constituting the intelligence node 13 and the socialization node 14 or may be constituted by combining a plurality of some of storage regions of storages included in a plurality of devices.

The intelligence node 13 and the socialization node 14 operate in the server device as described above, and the co-innovation space is implemented in the intelligence node 13 and the socialization node 14. The intelligence node 13 has a main function of the co-innovation space. On the other hand, the socialization node 14 has a function required in a case where sharing or trading of application programs, communication, and the like are performed between enterprises or between an enterprise and an individual among functions of the co-innovation space.

The intelligence node 13 performs management of the spinal node 12 that is communicatively connected to the intelligence node 13, and management of the device node 11. The user accesses the intelligence node 13 through a human machine interface (HMI) and uses the co-innovation space. This human machine interface may be, for example, the terminal device 16 illustrated in FIG. 1.

A device pool region (an accumulator (not illustrated)) that accumulates information (the entity identification information described above, or the entity identification information and the unique pass code) for identifying the device node in an initial state connected to the intelligence node 13) is provided in the intelligence node 13. This device pool region is a region in which information for identifying a newly available device node among device nodes connected to the intelligence node 13 is stored. Such information is automatically transmitted from the device node to the intelligence node 13 through plug-and-play, for example, when the device node is connected to the intelligence node 13, and is accumulated in the device pool region.

The intelligence node 13 includes various external interfaces for cooperating with various external systems. For example, the intelligence node 13 can cooperate with external IoT and IIoT cloud computing environments, external charging systems, external database systems, and the like. Thus, since the intelligence node 13 can cooperate widely with various external systems, the intelligence node 13 can construct the co-innovation space and an application on the co-innovation space widely cooperating with various external systems in various IoT cloud computing environments.

Since the intelligence node 13 includes the various external interfaces for cooperating with various external systems, the intelligence node 13 can utilize a group of interfaces that are provided by the IoT and IIoT cloud computing environments. Therefore, it is possible to develop solutions for an entire supply chain and an entire life cycle of a business process in a customer enterprise.

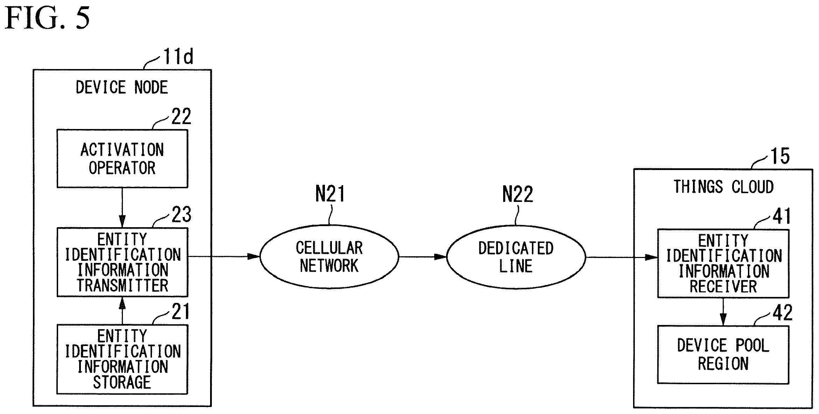

The things cloud 15 provides a platform service for connecting the device node to a cloud (specifically, the intelligence node 13). A device pool region 42 (see FIG. 5) that accumulates information (the entity identification information described above, or the entity identification information and the unique pass code) for identifying the device node in an initial state connected to the things cloud 15 is provided in the things cloud 15. The device pool region 42 is a region in which information for identifying a newly available device node among device nodes connected to the things cloud 15 is stored. Such information is automatically transmitted from the device node to the things cloud 15 through plug-and-play, for example, when the device node is connected to the things cloud 15, and is accumulated in the device pool region 42.

The service of the platform for connecting the above-described device node to the cloud (intelligence node 13) may be provided by one or a plurality of devices constituting the things cloud 15. The device pool region 42 may be a storage of one or a plurality of devices constituting the things cloud 15 or may be a combination of a plurality of some of the storage regions of the storages included in a plurality of devices.

The terminal device 16 is a device that is communicatively connected to a development environment for an application program provided via a network (a development environment provided by the application development environment providing system 1). This terminal device 16 is realized by a personal computer including an input device such as a keyboard, a display device (a display) such as a liquid crystal display device, a central processing unit (CPU), a RAM, and the like. A type of the personal computer may be, for example, a desktop type, a notebook type, or a tablet type.

### <Connection form between device node and intelligence node>

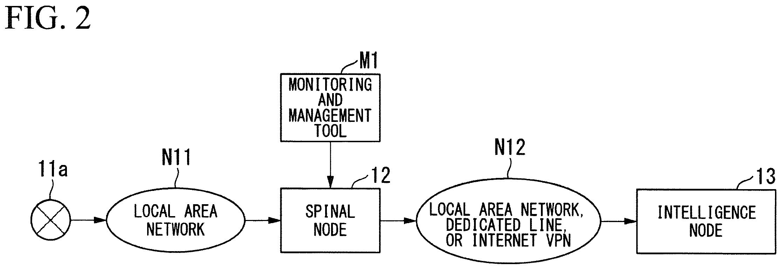

FIG. 2 is a diagram illustrating an example of a connection form between the device node and the intelligence node via the spinal node. As illustrated in FIG. 2, the device node 11a and the spinal node 12 are connected via a local area network N11. The spinal node 12 and the intelligence node 13 are connected via a communication network N12 such as a local area network, a dedicated line, or an Internet virtual private network (VPN). The spinal node 12 is managed by a monitoring and management tool M1.

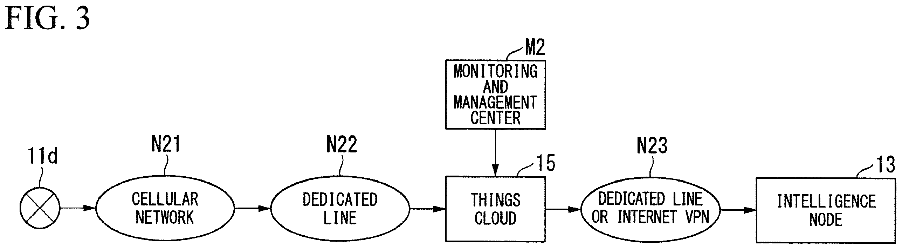

FIG. 3 is a diagram illustrating an example of a connection form between the device node and the intelligence node via the things cloud. As illustrated in FIG. 3, the device node 11d and the things cloud 15 are connected via a cellular network N21 and a dedicated line N22, for example. The things cloud 15 and the intelligence node 13 are connected via a dedicated line or a communication network N23 such as Internet VPN. The things cloud 15 is managed by a monitoring and management center M2.

The device node 11a illustrated in FIG. 2 and the device node 11d illustrated in FIG. 3 internally hold entity identification information (or entity identification information and a unique pass code). For example, when the installation of the device node 11a illustrated in FIG. 2 is completed, the entity identification information or the like of the device node 11a is transmitted to the spinal node 12 via the local area network N11 through plug-and-play. For example, when installation of the device node 11d illustrated in FIG. 3 is completed, the entity identification information or the like of the device node 11d is transmitted to the things cloud 15 via the cellular network N21 and the dedicated line N22 through plug-and-play.

FIG. 4 is a block diagram illustrating a configuration related to transmission and reception of entity identification information in the connection form illustrated in FIG. 2. As illustrated in FIG. 4, the device node 11a includes an entity identification information storage 21, an activation operator 22, and an entity identification information transmitter 23. The entity identification information storage 21 stores the entity identification information (or the entity identification information and the unique pass code). The activation operator 22 instructs the entity identification information transmitter 23 to transmit the entity identification information (or the entity identification information and the unique pass code) according to an activation operation through plug-and-play. The entity identification information transmitter 23 reads the entity identification information (or the entity identification information and the unique pass code) from the entity identification information storage 21 on the basis of the instruction of the activation operator 22, and transmits the entity identification information to the outside (for example, the local area network N11).

The spinal node 12 includes an entity identification information receiver 31 and a device pool region 32 (an accumulator). The entity identification information receiver 31 receives the entity identification information (or the entity identification information and the unique pass code) transmitted from the device node 11a via the local area network N11. The device pool region 32 stores the entity identification information (or the entity identification information and the unique pass code) received by the entity identification information receiver 31 in the device list.

FIG. 5 is a block diagram illustrating a configuration related to transmission and reception of entity identification information in the connection form illustrated in FIG. 3. As illustrated in FIG. 5, the device node lid includes an entity identification information storage 21, an activation operator 22, and an entity identification information transmitter 23, similar to the device node 11a illustrated in FIG. 4. In such a device node 11d, the entity identification information transmitter 23 reads the entity identification information (or the entity identification information and the unique pass code) from the entity identification information storage 21 on the basis of the instruction of the activation operator 22, and transmits the entity identification information to the outside (for example, the cellular network N21).

The things cloud 15 includes an entity identification information receiver 41 and a device pool region 42 (an accumulator). The entity identification information receiver 41 receives the entity identification information (or the entity identification information and the unique pass code) transmitted from the device node 11d through the cellular network N21 and the dedicated line N22 in order. The device pool region 42 stores the entity identification information (or the entity identification information and the unique pass code) received by the entity identification information receiver 41 in the device list.

### <Functional configuration of co-innovation space>

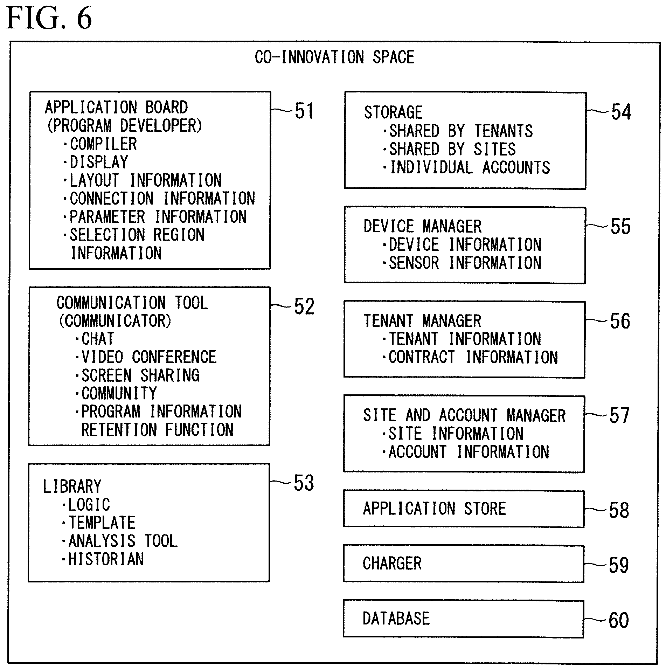

FIG. 6 is a functional configuration diagram of a co-innovation space that is installed in the application development environment providing system according to the embodiment of the present invention. A function of the co-innovation space may be realized by only one of the intelligence node 13 and the socialization node 14 or may be realized by both the intelligence node 13 and the socialization node 14. In the embodiment, it is assumed that the function of the co-innovation space is realized by the intelligence node 13 in order to simplify description.

As illustrated in FIG. 6, the co-innovation space realized in the intelligence node 13 includes an application board 51, a communication tool 52, a library 53, a storage 54, a device manager 55 (a manager or a management means), a tenant manager 56, a site and account manager 57, an application store 58, a charger 59, and a database 60.

The application board 51 (a program developer) provides a user with multi-tenant, multi-site, multi-account application development environments, and an application execution environment. The application board 51 has functions such as a compiler, and a display that can visually display an application program to the user. The display displays an image indicating the co-innovation space, and visually displays the application program on the basis of layout information, connection information, parameter information, selection region information, and the like in the co-innovation space.

The layout information is information representing a form of a process of an application program that is a development target. For example, the layout information includes information representing that the application program that is a development target is an application that performs a multi-input and two-output process, or that the application program that is a development target is an application that performs a multi-input multi-output process, or that the application program that is a development target is an application that performs a one-input multi-output process.

The connection information is information on lines, which is defined when a diagram visually indicating a relationship between data items or logics by connecting input data items, logic serving as content of a process, and output data items serving as results of the process using the lines in an application program that is a development target is generated. The parameter information is information representing setting values of various parameters set in the application program that is a development target.

The selection region information is information representing a part of process selected (designated) by an operation or the like of the user among a series of processes of the application program that is a development target. For example, with respect to an application program visually displayed by the application board 51, the user operates a mouse or the like so that a region of a part of the application program is surrounded. Accordingly, selection region information representing the surrounded region is generated.

The communication tool 52 provides a chat function, a video communication function, a voice communication function, a screen sharing function, a community function such as a bulletin board or a social network service (SNS), and the like, which are used among users. For example, with the chat function, not only text data (for example, source code), image data, an executable file of a program, and the like, but also a part or all of application programs that are development target, including setting information such as parameter values, can be transmitted or received and shared between users.

The library 53 provides, for example, generic processing logic, template, analysis tool, and historian (database in which historical information or achievement information is stored) which are used when an application program is developed or executed on the application board 51. For example, the library 53 stores various analysis tools, such as a similar waveform search tool, a regression analysis tool, a multiple regression analysis tool, an MT method analysis tool, an error variance analysis tool, a data driven modeling tool, a deep learning tool, and a correlation analysis tool.

The storage 54 divides various types of information (for example, developed application programs or analysis result data) into publicly opened information, tenant shared information, site shared information, and individual account information, and stores the publicly opened information, the tenant shared information, the site shared information, and individual account information in a storage region for public disclosure, a storage region shared by tenants, a storage region shared by sites, or a storage region for individual accounts. The storage region in which each user can store various types of information may be controlled on the basis of the authority set in advance for each user by the administrator of the tenant. The storage 54 may be a storage medium such as a hard disk drive (HDD), a flash memory, an EEPROM, a random access memory (RAM), a read only memory (ROM), or any combination thereof.

The device manager 55 manages information on a sensor, a device, a system, and the like constituting the device node 11 accommodated by the intelligence node 13. For example, the device manager 55 manages information in which the identification information imparted to the device node 11 and the identification information of the account, the site, and the tenant are associated with each other, which are used for accommodation of the device node 11.

The device manager 55 of the intelligence node 13 may acquire and manage the information on a sensor, a device, a system, and the like constituting the device node 11 accommodated by the spinal node 12 via the spinal node 12. Alternatively, the spinal node 12 may manage the information, and the device manager 55 of the intelligence node 13 may acquire the information from the spinal node 12.

The tenant manager 56 manages various types of information on a tenant (enterprise). For example, the tenant manager 56 performs setting, change, deletion, and the like on information such as basic information, billing information, operation authority, approval authority of the tenant. For example, the tenant manager 56 manages contract information on a contract related to use of the co-innovation space and use of paid or free applications, tools, templates, data, and the like for each tenant.

The site and account manager 57 manages various information on the site (an organization) and the account (a user). For example, the site and account manager 57 performs setting, change, deletion, and the like on information such as basic information of the site and account, billing information, operation authority, and approval authority.

The application store 58 is a function for allowing a user to purchase and sell a part or all of an application program, a logic, a template, data, and the like (hereinafter simply referred to as an application or the like). For example, an application or the like sold by the application store 58 may be charged according to an arbitrary charging method such as monthly charge, annual charge, charge according to usage, or one-time charge. A specific application or the like among applications or the like sold by the application store 58 may not be charged since a certain period (for example, one month) from a date on which the user has started using the application is a free trial period.

The charger 59 performs a charging process for a user who has purchased an application or the like sold by the application store 58. The charger 59 may perform a charging process for use of the co-innovation space. A charge destination may be registered in advance for each tenant, site, or account. When the purchased application or the like is an application or the like registered in the application store 58 by the user, a part of the amount collected by charging the user who has purchased the application or the like may be paid to a user who has registered the application or the like.

The database 60 holds, as a database, data such as production management information, plant driving management information, and quality information necessary for an operation of the application, and provides necessary data according to a request of the application. This database may be, for example, a general SQL database or may be a non-SQL database for a specific purpose. This database may be set for each tenant, site, or account, and the administrator may individually set an access authority according to the content of data. For these databases, an external database outside the co-innovation space may be referred to.

### <Accommodation of device node>

Next, accommodation of the device node in the system will be described. Here, the accommodation of the device node in the system means logically connecting the device node to the system, managing the device node, and performing input or output to or from the device node. As described with reference to FIGS. 4 and 5, the device node 11 holds the entity identification information (or the entity identification information and the unique pass code) in the internal entity identification information storage 21. The device node 11 transmits entity identification information or the like to the spinal node 12 and the things cloud 15 through plug-and-play. When the entity identification information or the like from the device node 11 is received by the spinal node 12 or the things cloud 15, the entity identification information or the like is accumulated in the device pool region 32 or the device pool region 42.

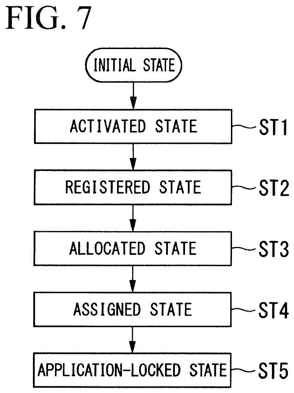

In this case, the presence of individual device nodes may not be known from another tenant from the viewpoint of security. Further, restriction of access from another user or another site may be desired. Further, it is very important to facilitate accommodation of the device from the viewpoint of improvement of efficiency of installation work and the viewpoint of cost reduction. In order to realize this, in the embodiment, five states including an activated state ST1, a registered state ST2, an allocated state ST3, an assigned state ST4, the application-locked state ST5 are defined, as illustrated in FIG. 7.

FIG. 7 is a state transition diagram illustrating state transition at the time of accommodation of a device node. First, the device node 11 is in an initial state at the time of factory shipment. By performing an operation called activation from the initial state, the device node 11 transitions to the activated state ST1. The activated state ST1 is a state in which the activated device node 11 is recognized by the spinal node 12 or the things cloud 15.

In this case, one or a plurality of devices constituting the spinal node 12 or the things cloud 15 may manage state transition of the device node by registering or changing the state (state information) of the activated device node 11 in the activated state ST1 using a state management file for managing each state of the device node stored in the storage or a storage region (not illustrated), which is constituted by such devices.

Normally, when the device node 11 is connected to the network and power is on, the activation is completed through plug-and-play. The connection of the device node 11 to the network can be realized by placing the device node 11 within a reach range of radio waves when the device node 11 is accommodated in a cellular network/wireless network. When the device node 11 is accommodated with a fiber or a twisted pair, the connection of the device node 11 to the network is realized, for example, by connecting wirings to the device node 11.

In the activated state ST1, entity identification information or the like of the activated device node 11 is accumulated in the device pool region 32 of the spinal node 12 or the device pool region 42 of the things cloud 15. However, no tenant can recognize the presence thereof. Accordingly, the device node 11 is not unexpectedly taken over, attacked, or skimmed.

Even in such a state, when the entity identification information or the like accumulated in the device pool regions 32 and 42 is known to a third party in any way, there is a risk that the device node 11 is taken over, attacked, or skimmed due to an operation such as registration (an operation of allocating the device node 11 and the tenant). A unique pass code is added to the entity identification information in order to reduce such a risk.

Next, the device node 11 transitions to the registered state ST2 by an operation such as the registration. The registered state ST2 is a state in which the device node 11 is allocated to a specific tenant. The tenant that accommodates the device node 11 in the intelligence node 13 notifies the spinal node 12 or the things cloud 15 of the entity identification information. Accordingly, the entity identification information (first information) and the tenant (second information) of the device node 11 held in the device pool regions 32 and 42 are associated with each other. This association is performed by the device manager 55 illustrated in FIG. 6. The associated entity identification information is copied to the device registration region of the tenant and deleted from the device pool regions 32 and 42.

In this case, the device manager 55 of the co-innovation space constituted by the intelligence node 13 may manage the state transition by changing the state (state information) of the registered device node 11 from the activated state ST1 to the registered state ST2 using the state management file for managing each state of the device node stored in the storage or a storage region (not illustrated).

As described above, spaces for respective tenants are safely isolated from each other. Therefore, in this state, the third-party tenant cannot recognize the accommodated device node 11 and this device node 11 cannot be allocated to the third-party tenant. When the entity identification information and the unique pass code are accumulated in the device pool regions 32 and 42, association with the entity identification information held in the tenant and the device pool regions 32 and 42 is not performed unless the intelligence node 13 simultaneously notifies of the entity identification information and the unique pass code of the device.

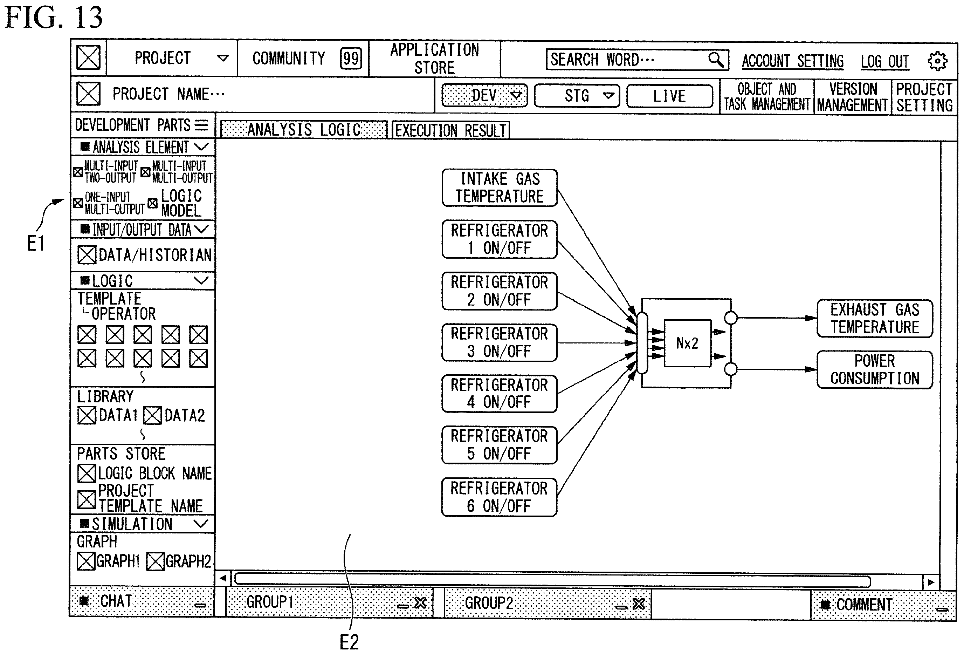

Next, the device node 11 transitions to the allocated state ST3 by performing an operation such as allocation (an operation of the administrator of the tenant allocating the device node 11 in the registered state ST2 to the site or account). The allocated state ST3 is a state in which the device node 11 is allocated to a specific tenant or account. In this allocated state ST3, when each user logs in to the co-innovation space of his or her account of the intelligence node 13, the user can recognize the device node 11 on the co-innovation space of the account of the user and use the device node 11 on the application development screen (see FIG. 13).

In this case, the device manager 55 of the co-innovation space constituted by the intelligence node 13 may manage the state transition by changing the state (state information) of the registered device node 11 from the registered state ST2 to the allocated state ST3 using the state management file for managing each state of the device node stored in the storage or a storage region (not illustrated).

Next, the device node 11 transitions to the assigned state ST4 by performing an operation such as assignment (an operation of the administrator of the tenant logging in to the tenant with an administrator authority and setting an authority for a site or an account under each tenant). The assigned state ST4 is a state in which the access authority for each site and each account is set. Here, in the initial state, the device node 11 can be recognized from any account of any site under the tenant and can be used. The administrator of the tenant can perform an authority setting for R/O (read only), R/W (read/write) and X (execution) for each site, account, or group to be set separately by logging in with an administrator authority.

In this case, the device manager 55 of the co-innovation space constituted by the intelligence node 13 may manage the state transition by changing the state (state information) of the registered device node 11 from the allocated state ST3 to the assigned state ST4 using the state management file for managing each state of the device node stored in the storage or a storage region (not illustrated).

Next, by performing an operation such as locking (an operation of limiting an authority for a setting change, stop, re-activation, or the like of the device node 11 to a specific application), the device node 11 transitions to the application-locked ST5. An application-locked state ST5 is a state in which the use of the device node 11 is restricted or permitted only to the specific application. This state is provided in order to restrict or permit the setting change, the stop, the re-activation, and the like of the device node 11 so that the device node 11 can be stably used.

An operation such as locking can be executed by any account, and the administrator of the tenant can forcibly change this. A device in the application-locked ST5 can perform reading when an authority for R/O (read only) is set. When the setting is to be changed in order for a device in the application-locked ST5 to be used from a program of another application, an error is returned and a user ID and an application ID performing the operation such as locking are presented.

In this case, the device manager 55 of the co-innovation space constituted by the intelligence node 13 may manage the state transition by changing the state (state information) of the registered device node 11 from the assigned state ST4 to the application-locked state ST5 using the state management file for managing each state of the device node stored in the storage or a storage region (not illustrated).

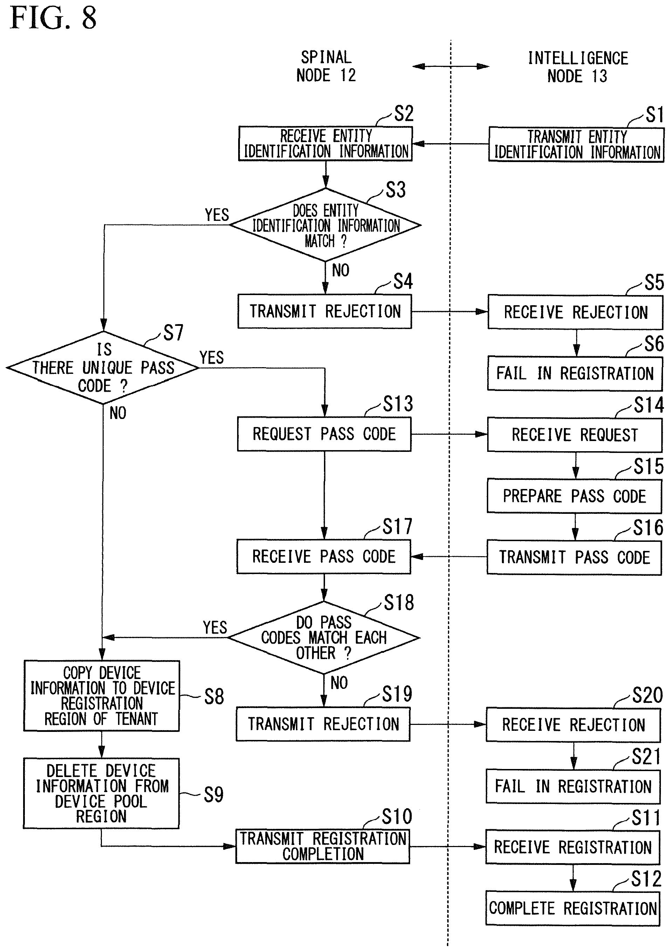

FIG. 8 is a flowchart showing a process when the device node is accommodated. The flowchart illustrated in FIG. 8 shows a process until the accommodated device node 11 transitions to the registered state ST2. Here, in order to facilitate understanding, a case in which the device node 11 connected to the spinal node 12 is accommodated will be described by way of example. However, the same process is performed when the device node 11 connected to the things cloud 15 is accommodated.

First, the intelligence node 13 transmits the entity identification information of the device node to be accommodated to the spinal node 12 (step S1). This process is performed, for example, by the user operating the terminal device 16 to input the entity identification information of the device node to be accommodated. The spinal node 12 receives the entity identification information transmitted from the intelligence node 13 (step S2). Then, the spinal node 12 compares the received entity identification information with a device-specific information list of the device pool region 32, and determines whether or not there is matching entity identification information (step S3).

When the spinal node 12 determines that the entity identification information does not match (a determination result of step S3 is "NO"), the spinal node 12 transmits a rejection to the intelligence node 13 (step S4). The intelligence node 13 receives the rejection transmitted from the spinal node 12 (step S5). Then, the intelligence node 13 fails to register the device node 11 (step S6).

On the other hand, when the spinal node 12 determines that there is the matching entity identification information (when the determination result of step S3 is "YES"), the spinal node 12 determines whether there is a unique pass code corresponding to the entity identification information (step S7). When the spinal node 12 determines that there is no unique pass code (a determination result of step S7 is "NO"), the spinal node 12 copies the information on the device node 11 to the device registration region of the tenant (step S8). Thereafter, the spinal node 12 deletes information on the device in the device pool region 32 (step S9).

The spinal node 12 transmits registration completion to the intelligence node 13 (step S10). The intelligence node 13 receives the registration completion transmitted from the spinal node 12 (step S11). Then, in the intelligence node 13, the registration of the device node 11 is completed (step S12). Accordingly, the registered device node 11 is in the registered state ST2.

On the other hand, when the spinal node 12 determines in step S7 that there is the unique pass code (the determination result in step S7 is "YES"), the spinal node 12 transmits a pass code request to the intelligence node 13 (step S13). The intelligence node 13 receives the pass code request transmitted from the spinal node 12 (step S14). Then, the intelligence node 13 prepares a unique pass code (step S15) and transmits the unique pass code to the spinal node 12 (step S16).

The spinal node 12 receives the unique pass code transmitted from the intelligence node 13 (step S17). Then, the spinal node 12 compares the received unique pass code with a unique pass code accumulated in the device pool region 32, and determines whether or not the unique pass codes match each other_(step S18).

When the spinal node 12 determines that the unique pass codes do not match each other (the determination result of step S18 is "NO"), the spinal node 12 transmits a rejection to the intelligence node 13 (step S19). The intelligence node 13 receives the rejection transmitted from the spinal node 12 (step S20). Then, the intelligence node 13 fails to register the device node 11 (step S21). On the other hand, when the spinal node 12 determines that the unique pass codes match each other (the determination result of step S18 is "YES"), the spinal node 12 and the intelligence node 13 perform the processes of the steps S8 to 12 described above, and the registration of the device node 11 is completed. Accordingly, the registered device node 11 is in the registered state ST2.

### <Device node accommodation work procedure>

Next, a specific work procedure for accommodating the device node 11 will be described. As described with reference to FIG. 7, in the embodiment, when the device node 11 is accommodated, it is necessary for the device node 11 to be set to five states including the activated state ST1, the registered state ST2, the allocated state ST3, the assigned state ST4, and the application-locked state ST5. The transition from the initial state to the activated state ST1 can be performed through plug-and-play.

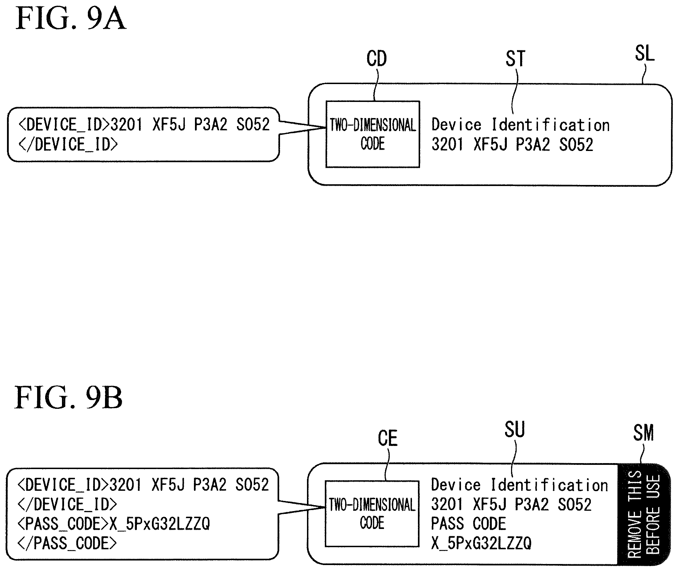

However, the transition from the registered state ST2 to the application-locked state ST5 requires an operation of the administrator of the tenant. For example, the administrator of the tenant needs to perform work of inputting the entity identification information of the device node 11 and inputting the unique pass code. Therefore, a burden on the administrator of the tenant is great. Therefore, in the embodiment, in order to simplify work of accommodating the device, the seal SL on which the two-dimensional code CD is printed together with the entity identification information and the unique pass code is affixed to the device node 11, as illustrated in FIG. 9.

FIGS. 9A and 9B are diagrams illustrating an example of a seal affixed to a device node. A character string ST indicating the entity identification information of the device node and a two-dimensional code CD including the entity identification information are printed on a seal SL illustrated in FIG. 9A. The character string ST includes "Device Identification" indicating the entity identification information of the device node and entity identification information "3201 XF5J P3A2 S052" of the device node. The two-dimensional code CD includes information in which the entity identification information of the device node 11 is described in an Extensible Markup Language (XML) format. Here, although it is assumed that the seal SL on which the character string ST indicating the entity identification information of the device node and the two-dimensional code CD including the entity identification information are printed is affixed to the device node, the character string ST and the two-dimensional code CD may be printed or engraved directly on the device node.

A character string SU indicating the entity identification information and the unique pass code of the device node and a two-dimensional code CE including the entity identification information and the unique pass code are printed on a seal SM illustrated in FIG. 9B. The character string SU includes "Device Identification" indicating the entity identification information of the device node, entity identification information "3201 XF5J P3A2 S052" of the device node, "PASS CODE" indicating a unique pass code, and a pass code "X-5PxG32LZZQ". The two-dimensional code CE includes information in which the entity identification information and the unique pass code of the device node 11 are described in an XML format.

As in the seal SM illustrated in FIG. 9B, when the character string SU includes the unique pass code, there is a risk that the unique pass code is known to others. Therefore, the seal SL and the seal SM can be normally used together and the seal SM can be easily peeled off. The two-dimensional code CD printed on the seal SL illustrated in FIG. 9A and the two-dimensional code CE printed on the seal SM illustrated in FIG. 9B are matrix type of two-dimensional codes such as QR codes (registered trademark) or may be stack type of two-dimensional codes. The two-dimensional codes CD and the CE are not limited to the two-dimensional codes, but may be other codes such as one-dimensional codes. Accordingly, the seal SM is to be peeled off from the device node and stored and managed separately from the viewpoint of security for preventing a situation in which a third party specifies and uses a device on the network after the two-dimensional code is read at the time of installation and the setting of the device node is completed.

### «First example of accommodation work procedure»

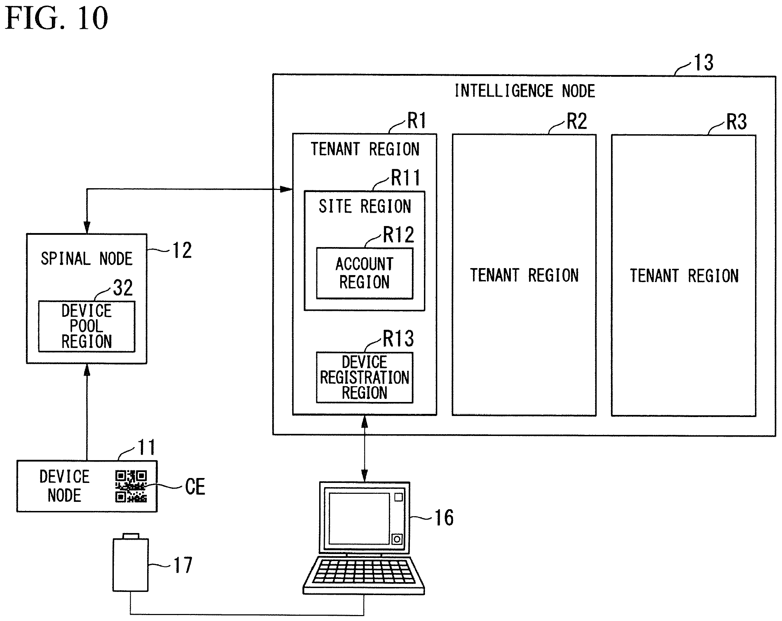

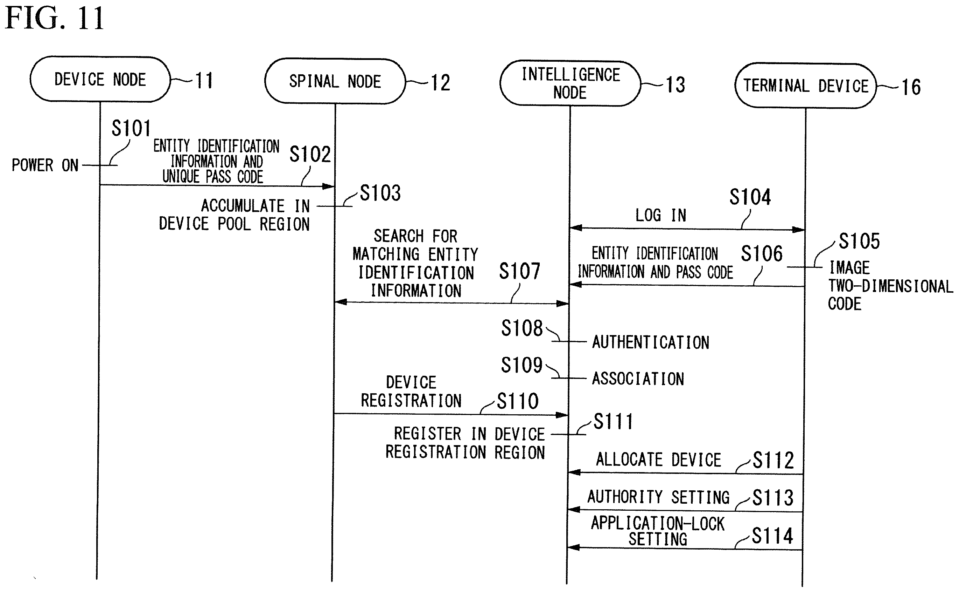

FIG. 10 is a diagram illustrating a first example of a device node accommodation work procedure, and FIG. 11 is a sequence diagram illustrating a first example of the same work procedure. As illustrated in FIG. 10, tenant regions R1 to R3 for each tenant are provided in the co-innovation space realized by the intelligence node 13. These tenant regions R1 to R3 are created using information managed by the tenant manager 56 illustrated in FIG. 6. Here, for simplicity of description, only three tenant regions R1 to R3 are shown. However, the tenant region is provided corresponding to the number of tenants that uses the co-innovation space. Hereinafter, a first example of the accommodation work procedure will be described focusing on a tenant provided with the tenant region R1 (hereinafter referred to as a "tenant A") for ease of understanding.

As illustrated in FIG. 10, a site region R11 for each site (organization) belonging to the tenant A is provided inside the tenant region R1. In FIG. 10, only the site region R11 of a certain site (hereinafter referred to as a "site B") belonging to the tenant A is illustrated for simplicity of illustration. An account region R12 for each account (user) belonging to the site B is provided inside the site region R11. In FIG. 10, only the account region R12 of one account (hereinafter referred to as an "account C") belonging to site B is illustrated for simplification of illustration. The site region R11 and the account region R12 are created using the information managed by the site and account manager 57 illustrated in FIG. 6.

A device registration region R13 in which the device node that can be shared by the site or account belonging to the tenant A is registered is provided inside the tenant region R1. This device registration region R13 is created using the information that is managed by the device manager 55 illustrated in FIG. 6. In the example illustrated in FIG. 10, the device node registered in the device registration region R13 provided inside the tenant region R1 can be shared by the tenant A, the site B, and the account C. The sites or accounts belonging to the tenant A can share data, logic, applications, and the like, in addition to the device node registered in the device registration region R13.

As illustrated in FIG. 11, an administrator of the tenant A first installs the device node 11 and turns on a power supply for the device node 11 (step S101). When the power of the device node 11 is turned on, the device node 11 is connected to the spinal node 12, the intelligence node 13, or the things cloud 15 through plug-and-play. Here, as an example, it is assumed that the device node 11 is connected to the spinal node 12. When the device node 11 is connected to the spinal node 12, the device node 11 transmits the entity identification information (or the entity identification information and the unique pass code) of the device node 11 to the spinal node 12 (step S102). The entity identification information of the device node 11 is accumulated in the device pool region 32 of the spinal node 12. Accordingly, the state of the device node 11 changes from an initial state to the activated state ST1.

Then, the administrator of the tenant A operates the terminal device 16 to access the intelligence node 13 and logs in to the co-innovation space (step S104). Accordingly, the administrator of the tenant A can use the tenant region R1 provided in the co-innovation space realized by the intelligence node 13. Subsequently, the administrator of the tenant A selects a device registration menu prepared in advance in the co-innovation space.

The administrator of the tenant A images the two-dimensional code CE of the seal SM affixed to the device node 11 using a camera 17 connected to the terminal device 16 (step S105). When the two-dimensional code CE is imaged by the camera 17, the entity identification information (or the entity identification information and the unique pass code) of the device node 11 is read from the two-dimensional code CE. The terminal device 16 transmits the read entity identification information (or the entity identification information and the unique pass code) to the intelligence node 13 (step S106).

The camera 17 connected to the terminal device 16 described above may be, for example, a mobile terminal device such as a smartphone having a camera function. When such a mobile terminal device is used, the mobile terminal device can be connected to the intelligence node 13 via a wireless telephone line, for example, even when the device node 11 is installed outdoors without a network or a personal computer (PC). Thus, it is possible to perform work efficiently.

Then, the intelligence node 13 accesses the device pool region 32 of the spinal node 12 and searches for the same entity identification information as the entity identification information transmitted from the terminal device 16 (step S107). In a case where there is a unique pass code corresponding to the entity identification information, the intelligence node 13 compares the unique pass code accumulated in the device pool region 32 with the unique pass code transmitted from the terminal device 16 and performs authentication (step S108: authentication process).

When the same entity identification information as the entity identification information transmitted from the terminal device 16 is searched for (in other words, when the same entity identification information as the entity identification information transmitted from the terminal device 16 is present in the device pool region 32), the intelligence node 13 performs a process of associating the tenant A with the device node 11 (step S109). This process is performed by the device manager 55 in FIG. 6. Thereafter, the spinal node 12 transmits the information on the device node 11 accumulated in the device pool region 32 to the intelligence node 13 (step S110). The intelligence node 13 registers the information on the device node 11 in the device registration region R13 of the tenant A (step Sill). Accordingly, the state of the device node 11 changes from the activated state ST1 to the registered state ST2. The information on the device node 11 transferred to the intelligence node 13 is deleted from the device pool region 32.

When the device node 11 is registered as a device node of the tenant A, the administrator of the tenant A operates the terminal device 16 to allocate the device node 11 to the site B or the account C under the tenant A (step S112). Accordingly, the intelligence node 13 performs a process (a first process) of assigning a device node to a specific site and account (for example, the site B and the account C). When this process ends, the state of the device node 11 changes from the registered state ST2 to the allocated state ST3.

The administrator of the tenant A who has logged in with an administrator authority operates the terminal device 16 to perform an authority setting for R/O (read only), R/W (read/write), X (execution), or the like with respect to the site B or the account C under the tenant A (step S113). Accordingly, the intelligence node 13 performs a process (a second processing) of setting an access authority for the device node 11 for each site and account. When this process ends, the state of the device node 11 transitions from the allocated state ST3 to the assigned state ST4.

An arbitrary site of the tenant A, the account, or the administrator of the tenant A manipulates the terminal device 16 to perform an operation (lock) for limiting an authority for setting change, stop, re-activation, and the like of the device node 11 to a specific application (step S114). Accordingly, the intelligence node 13 performs a process (third process) of restricting or permitting a use of the device node 11 only to a specific application program. When this process ends, the state of the device node 11 transitions from the assigned state ST4 to the application-locked state ST5.

### «Second example of accommodation work procedure»

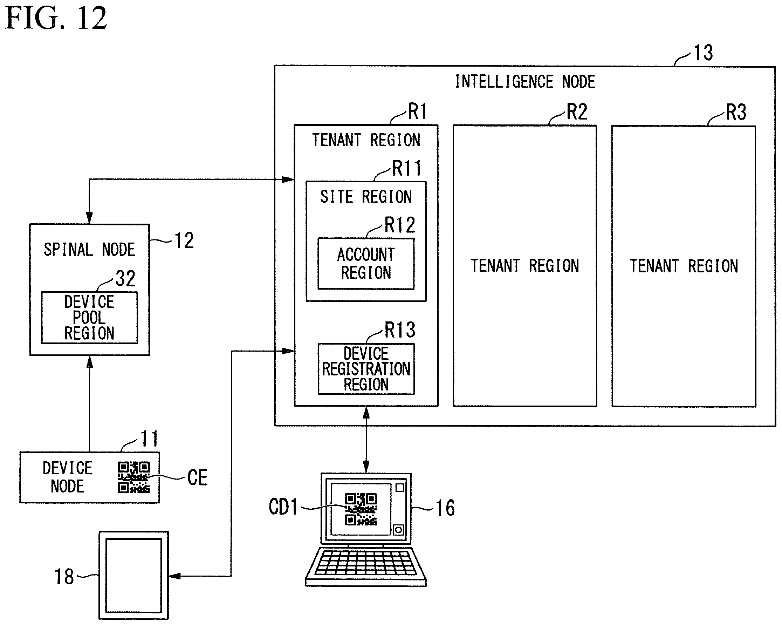

FIG. 12 is a diagram illustrating a second example of the device node accommodation work procedure. In this example, processes from the activated state ST1 to the assigned state ST4 can be easily performed by using the application of the mobile terminal 18. That is, the processes of steps S104 to S112 illustrated in FIG. 11 are performed by the application of the mobile terminal 18.

In this example, a case in which the application of the mobile terminal 18 is used will be described by way of example, but the present invention is not limited thereto. For example, the processes of steps S104 to S112 illustrated in FIG. 11 may be performed by accessing the device registration screen (application) on the co-innovation space from the mobile terminal 18 via a browser and using the device registration screen (application).

After the installation of the device node 11 is completed, the administrator of the tenant A activates the application of the mobile terminal 18 and reads a two-dimensional code CD1 displayed on the terminal device 16 using the mobile terminal 18. Accordingly, an account ID and a password are input to the mobile terminal 18. The account ID and the password input to the mobile terminal 18 are automatically transmitted to the intelligence node 13 by the application of the mobile terminal 18. Accordingly, the administrator of the tenant A logs in to the co-innovation space (step S104).

Here, the two-dimensional code CD1 displayed on the terminal device 16 includes an account ID and a password required for the administrator of the tenant A to log in to the co-innovation space. When the administrator of the tenant A selects, for example, a "contract information" menu in a state in which the administrator of the tenant A logs in to the co-innovation space with the terminal device 16, the two-dimensional code CD1 is displayed together with contract information of the tenant to which the administrator of the tenant A belongs.

Thus, in this example, the administrator of the tenant A can log in to the co-innovation space simply by performing the operation of reading the two-dimensional code CD1 with the application of the mobile terminal 18. Therefore, when the administrator of the tenant A logs in to the co-innovation space, it becomes unnecessary to input the account ID and the password, and the administrator of the tenant A can log in to the co-innovation space very easily. The two-dimensional code CD1 may be printed and the printed two-dimensional code CD1 may be read by the terminal device 16.

The example in which the administrator of the tenant A reads the two-dimensional code CD1 that is displayed on the terminal device 16 by the application of the mobile terminal 18 and inputs the account ID and the password to the mobile terminal 18 to log in to the co-innovation space has been described, but the present invention is not limited thereto. For example, the administrator of the tenant A may input the account ID and the password on the screen of the mobile terminal 18 using a keyboard of the mobile terminal 18 to log in the co-innovation space.

After the log-in to the co-innovation space is completed, the administrator of the tenant A images the two-dimensional code CE of the seal SM stuck to the device node 11 using the mobile terminal 18 (step S105). Accordingly, the entity identification information (or the entity identification information and the unique pass code) of the device node 11 is read from the two-dimensional code CE. Then, the processes of steps S106 to S112 are automatically performed by the application of the mobile terminal 18, and the process up to the allocated state ST3 is completed. In the process of step S112, it is necessary to set a site or an account to which the device node 11 is allocated, but setting information is set in the application of the mobile terminal 18 in advance.

An authority of each site or account may be selected on an input screen of the application of the mobile terminal 18, and the administrator of the tenant A logs in to the co-innovation space of the intelligence node 13 with an administrator authority using the mobile terminal 18. In this case, the process up to step S113 can be performed by the application of the mobile terminal 18, and the process up to the assigned state ST4 is completed. Accordingly, it is possible to further simplify the work.

### <Application development screen>

FIG. 13 is a diagram illustrating an example of the application development screen according to an embodiment of the present invention. After the device node is accommodated (or while the device node is being performed), each user (account) can develop application programs via the network on the application development screen illustrated in FIG. 13. In this application development screen, a plurality of users (accounts) set for each tenant and each site can create, manage, monitor, and execute application programs while sharing data, logics, applications, and states according to an execution authority set by the administrator in advance. This application development screen is displayed, for example, on a display device (display) of the terminal device.

The application development screen illustrated in FIG. 13 has a development part list display region E1 and an application design region E2. The development part list display region E1 is a region in which a list of development parts to be used for developing an application program is displayed. In the development part list display region E1, for example, analysis elements, input and output data items (for example, sensor output), various general-purpose logics (operators and functions), and the like are listed and displayed as development parts.

The application design region E2 is a region in which a structure of an application program that is a development target is visually displayed. In this application design region E2, it is possible to create and edit the application program that is a development target. For example, the user selects a necessary development part from the list of development parts (for example, the analysis elements, the data items for input and output data, and logics that are content of a process) displayed in the development part list display region E1, and drags and drops the selected part into the application design region E2 through a mouse operation or the like. Thus, it is possible to display an image showing the selected development part in the application design region. It is possible to create the application program by connecting the development parts displayed in the application design region E2 with lines or arrows.

When the device node 11 is accommodated and the device node 11 transitions to the allocated state ST3, the accommodated device node 11 is displayed as the development part in the development part list display region E1 on the application development screen of the tenant, site, and account to which the device node 11 is allocated. Each tenant, site, and account can share the accommodated device node 11 and create or edit programs.

When the accommodated device node 11 transitions to the assigned state ST4, the access authority is set for each site and account. Therefore, use of the device node 11 is restricted only within a range of the set authority for a user who is performing development on the application development screen illustrated in FIG. 13. When the accommodated device node 11 transitions to the application-locked state ST5, the use of the device node 11 is restricted only to a specific application. Therefore, the user who is performing development on the application development screen illustrated in FIG. 13 can use the device node 11 only when the user develops an application permitted to use.

As described above, in the embodiment, in a case where the entity identification information of the device node 11 to be used in the application program is specified in accordance with the instruction of the administrator of the tenant that uses the application development environment providing system 1, the specified entity identification information is associated with the tenant that has specified the entity identification information, and a management process of restricting or permitting the use of the device node 11 is performed. Therefore, the device node 11 can be accommodated in the system with high security.

Specifically, the application development environment providing system 1 can be used for various enterprises (tenants). For example, when an engineering system realized in a plant is developed, the application development environment providing system 1 can be used by a customer (for example, an orderer), an engineering company (for example, a contractor), and a third vendor (a third party). In such a system that is used by various tenants, the presence of the device node 11 to be used in the plant may not be known to other tenants from the viewpoint of security. Further, restriction of access from another department (site) or another employee (user) in the same tenant may be desired.

In the embodiment described above, by performing the management process for restricting or permitting the use of the device node 11, the use of the device node 11 is restricted to a specific site and account belonging to a specific tenant, and the authority for access to the device node 11 is set for each site and account, and the use of the device node 11 is restricted to only a specific application program. Accordingly, for example, the presence of the device node 11 to be used in the plant is not known to other tenants, and the access from another department (site) or another employee (user) in the same tenant can be restricted. Thus, in the embodiment, it is possible to accommodate the device node 11 in the system with high security.

Since the device nodes 11 to be handled by the tenant are equally managed, the sensor, device, and system directly connected to the intelligence node 13, the sensor, device, and system connected to the intelligence node 13 via the spinal node 12, and the sensor, device, and system connected to the intelligence node 13 via the things cloud 15 can be equally recognized when viewed from the application. Accordingly, each site or each account can similarly handle the device and develop and edit programs.

In the embodiment described above, the seals SL and SM on which the two-dimensional codes CD and CE including the information such as the entity identification information or the unique pass code have been printed are affixed to the device node 11. Therefore, the entity identification information or the pass code of the device node 11 can be efficiently input. The user reads the two-dimensional code CD1 using the mobile terminal 18 and logs in to the co-innovation space, and the application of the mobile terminal 18 realizes the accommodation work of the device node 11. Therefore, it is possible to efficiently accommodate the device node 11.

In the embodiment described above, the device node 11 connected to the spinal node 12 is connected to the spinal node 12 in the initial state, and accumulates the entity identification information or the unique pass code in the device pool region 32 of the spinal node 12. The device node 11 connected to the intelligence node 13 is connected to the intelligence node 13 in the initial state and accumulates the entity identification information or the unique pass code in a device pool region (not illustrated) of the intelligence node 13. The device node 11 connected to the things cloud 15 is connected to the things cloud 15 in the initial state and accumulates the entity identification information or the unique pass code in the device pool region 42 of the things cloud 15.

Although the device pool region in which a place (a network) to which the device node 11 is connected or the information (entity identification information or the unique pass code) of the device node 11 is accumulated is divided in the embodiment described above as described above, the device pool region may be used in common. For example, since a cloud can be accessed from any place using the cellular network, all the device nodes 11 are connected to the things cloud 15 in an initial state, and the information on all the device nodes 11 may be accumulated in the device pool region 42 of the things cloud 15.

The embodiment of the present invention has been described in detail above, but the present invention is not limited to the embodiment described above and can be freely changed within the scope of the present invention. For example, a part or all of the application development environment providing system 1 in the embodiment described above may be realized by a computer. When a part or all of the application development environment providing system 1 is realized by a computer, the part or all of the application development environment providing system 1 may be realized by recording one or more programs for realizing some or all of the functions of the application development environment providing system 1 on a computer-readable recording medium, loading one or more programs recorded on the recording medium into a computer system, and executing the programs.

The "computer system" referred to herein is a computer system built in the application development environment providing system 1 and includes an OS or hardware such as peripheral devices. The "computer-readable recording medium" refers to a storage device, such as a portable medium such as a flexible disk, a magneto-optical disc, a ROM, or a CD-ROM, or a hard disk built in the computer system.

Further, the "computer-readable recording medium" may also include a recording medium that dynamically holds a program for a short period of time, such as a communication line when a program is transmitted via a network such as the Internet or a communication line such as a telephone line, or a recording medium that holds a program for a certain period of time, such as a volatile memory inside a computer system serving as a server or a client in such a case. Further, the program may be a program for realizing some of the above-described functions. Further, the program may be a program capable of realizing the above-described functions in combination with a program previously stored in the computer system.

The application development environment providing system 1 in the embodiment described above may be realized as an integrated circuit such as a large scale integration (LSI). Each functional block of the application development environment providing system 1 may be individually implemented as a processor, or a part or all thereof may be integrated into a processor. A scheme of the integration is not limited to the LSI, and the application development environment providing system 1 may be realized by a dedicated circuit or a general purpose processor. When an integrated circuit technology for replacing the LSI emerges due to the advance of a semiconductor technology, an integrated circuit according to the technology may be used.

The terms denoting directions such as "front, back, top, bottom, right, left, vertical, horizontal, bottom, horizontal, row, and column" in the present specification refer to these directions in the device of the present invention. Accordingly, these terms in the specification of the present invention should be construed relatively in the device of the present invention.

The term "configured" is configured to execute the functions of the present invention or is used to indicate a configuration, elements, and portions of a device.

Further, the terms expressed as "means-plus-function" in the claims should include any structure that can be used to execute the functions included in the present invention.

The term "unit" is used to indicate a component, unit, hardware, or a portion of software programmed to execute a desired function. Typical examples of the hardware are devices or circuits, but the present invention is not limited thereto.

Although the preferred embodiments of the present invention have been described above, the present invention is not limited to these examples. Additions, omissions, substitutions, and other changes in the configuration are possible without departing from the spirit of the present invention. The present invention is not limited by the foregoing description, but only by the scope of the appended claims.

### [Reference Signs List]

- 1: Application development environment providing system
- 11: Device node
- 16: Terminal device
- 32: Device pool region
- 42: Device pool region
- 55: Device manager
- E1: Development parts list display region
- E2: Application design region

## Claims

1. An application development environment providing system which provides a development environment for an application program via a network, the application development environment providing system comprising:
a manager configured to, in a case where first information for identifying a device node to be used in the application program is specified in accordance with an instruction of a tenant that uses the development environment, associate the specified first information with second information on the tenant that has specified the first information, and to perform a management process of restricting or permitting a use of the device node.

2. The application development environment providing system according to claim 1,
wherein in a case where the first information is specified, the manager is configured to search an accumulator in which the first information of the device node connected to a network is accumulated, and
wherein when the specified first information is searched, the manager is configured to associate the first information with the second information.

3. The application development environment providing system according to claim 2,
wherein in a case where there is authentication information corresponding to the first information, the manager is configured to perform authentication process using authentication information accumulated in the accumulator and authentication information instructed with the first information by the tenant.

4. The application development environment providing system according to any one of claims 1 to 3,
wherein the management process comprises at least one of:
a first process of assigning the device node to a specific site and account among sites and accounts belonging to the tenant which has specified the first information;
a second process of setting an access authority for the device node for each of the site and the account; and
a third process of restricting or permitting a use of the device node only to a specific application program.

5. The application development environment providing system according to any one of claims 1 to 4,
wherein the device node to which the management process has been performed is displayed as development parts on an application development screen.

6. The application development environment providing system according to claim 5,
wherein the application development screen comprises:
a development part list display region in which the device node to which the management process has been performed is displayed; and
an application design region in which a structure of the application program is visually displayed and it is possible to create and edit the application program.

7. The application development environment providing system according to any one of claims 1 to 6, further comprising:
a program developer configured to provide a user with the application development environment, and to visually display the application program.

8. The application development environment providing system according to claim 7,
wherein the program developer is configured to visually display the application program on the basis of layout information, connection information, parameter information, and selection region information,
wherein the layout information is information representing a form of a process of the application program,
wherein the connection information is information on a line connecting an input data item, a logic serving as content of a process, and an output data item serving as a result of the process,
wherein the parameter information is information representing a setting value of a parameter set in the application program, and
wherein the selection region information is information representing a part of process selected by a user among a series of processes of the application program.

9. The application development environment providing system according to any one of claims 1 to 8, further comprising:
a communicator configured to transmit and receive a part or all of the application program including setting information.

10. The application development environment providing system according to claim 9,
wherein the communicator is configured to provide at least one of a chat function, a video communication function, a voice communication function, a screen sharing function, and a community function.

11. The application development environment providing system according to claim 7 or 8, further comprising:
a library configured to provide a tool which is used when an application program is developed or executed on the program developer.

12. The application development environment providing system according to claim 11,
wherein the library is configured to provide at least one of a similar waveform search tool, a regression analysis tool, a multiple regression analysis tool, an MT method analysis tool, an error variance analysis tool, a data driven modeling tool, a deep learning tool, and a correlation analysis tool.

13. An application development environment provision method of providing a development environment for an application program via a network, the application development environment provision method comprising:
specifying first information for identifying a device node to be used in the application program in accordance with an instruction of a tenant that uses the development environment;
associating the specified first information with second information on the tenant that has specified the first information; and
performing a management process of restricting or permitting a use of the device node.

14. The application development environment provision method according to claim 13, further comprising:
searching the specified first information from an accumulator in which the first information of the device node connected to a network is accumulated; and
associating the first information with the second information when the specified first information is searched.

15. The application development environment provision method according to claim 13 or 14, further comprising at least one of:
assigning the device node to a specific site and account among sites and accounts belonging to the tenant which has specified the first information;
setting an access authority for the device node for each of the site and the account; and
restricting or permitting a use of the device node only to a specific application program.

16. A non-transitory computer readable storage medium storing one or more programs configured for execution by a computer, the one or more programs comprising instructions for:
providing a development environment for an application program via a network; and
in a case where first information for identifying a device node to be used in the application program is specified in accordance with an instruction of a tenant that uses the development environment, associating the specified first information with second information on the tenant that has specified the first information, and performing a management process of restricting or permitting a use of the device node.

17. A terminal device which is communicably connected to a development environment for an application program provided via a network, the terminal device comprising:
a display configured to display a device node to which a management process of restricting or permitting a use of the device node has been performed, first information for identifying the device node to be used in the application program being specified in accordance with an instruction of a tenant that uses the development environment, the first information being associated with second information on the tenant that has specified the first information.

18. The terminal device according to claim 17,
wherein the management process comprises at least one of:
a first process of assigning the device node to a specific site and account among sites and accounts belonging to the tenant which has specified the first information;
a second process of setting an access authority for the device node for each of the site and the account; and
a third process of restricting or permitting a use of the device node only to a specific application program.

19. The terminal device according to claim 17 or 18,
wherein the device node to which the management process has been performed is displayed as development parts on an application development screen.

20. The terminal device according to claim 19,
wherein the application development screen comprises:
a development part list display region in which the device node to which the management process has been performed is displayed; and
an application design region in which a structure of the application program is visually displayed and it is possible to create and edit the application program.
